Europäisches Patentamt

European Patent Office

Office européen des brevets

(19)

(11) Publication number: **0 137 332 B1**

(12) **EUROPEAN PATENT SPECIFICATION**

(45) Date of publication of patent specification: **15.01.92**    (51) Int. Cl.⁵: **C08G  67/02**, B29C 65/04

(21) Application number: **84110854.1**

(22) Date of filing: **12.09.84**

Divisional application 91109457.1 filed on
12/09/84.

(54) **High-frequency heatable plastics.**

(30) Priority: **12.09.83 US 531110**

(43) Date of publication of application:
**17.04.85 Bulletin  85/16**

(45) Publication of the grant of the patent:
**15.01.92 Bulletin  92/03**

(84) Designated Contracting States:
**AT BE CH DE FR GB IT LI NL SE**

(56) References cited:
**DE-A- 1 918 562**
**DE-A- 2 238 555**
**US-A- 3 948 873**

**JOURNAL OF POLYMER SCIENCE, vol. 15,
1977, pages 247-253, Polymer Physics Edi-
tion, John Wiley & Sons, New York, US; H. W.
STARKWEATHER "Melting and internal mo-
tion in highly alternating copolymers of eth-
ylene and carbon monoxide"**

(73) Proprietor: **THE DOW CHEMICAL COMPANY
2030 Dow Center Abbott Road P.O. Box 1967
Midland Michigan 48640-1967(US)**

(72) Inventor: **Lancaster, Gerald M.
P.O. Box 3479
Freeport Texas 77541(US)**
Inventor: **Allen, James A.
105 Fir Drive
Lake Jackson Texas 77566(US)**

(74) Representative: **Raynor, John et al
W.H. Beck, Greener & Co 7 Stone Buildings
Lincoln's Inn
London WC2A 3SZ(GB)**

EP 0 137 332 B1

Rank Xerox (UK) Business Services

JOURNAL OF POLYMER SCIENCE, vol. 18, 1980, pages 683-695, Polymer Physics Edition, John Wiley & Sons, New York, US; F. DECOSSAS et al.: "Etude diélectrique de trois copolymères éthylène-monoxyde de carbone"

JOURNAL OF POLYMER SCIENCE, vol. 9, no. 3, part A-2, 1971, pages 499-515, John Wiley & Sons, New York, US; P.J. PHILLIPS et al.: "Dielectric and Rheo-optical properties of some ethylene-carbon monoxide copolymers"

KUNSTSTOFF-PHYSIK IM GESPRÄCH, 2nd edition, 1968, pages 175-178, BASF, Ludwigshafen;

KUNSTSTOFFVERARBEITUNG, 1st edition, 1978, pages 187-189; Vogel-Verlag, Würzburg;

# EP 0 137 332 B1

**Description**

The use of high-frequency electromagnetic energy as a means of heating polymers is an advancing art which finds application in many fields, especially in fields in which conventional conductive, convective, or radiant heat energy is not suitable, practical, or possible. For instance, sealing of a polymer to itself or to some other substrate can be with appropriate polymer compositions an important commercial technique in producing a desired end-product.

There are some polymers which are not well-suited for high-frequency heating operations. In such ill-suited polymers, high-frequency heating does not occur, or occurs only after inefficiently prolonged time. In production assembly lines, a quick heat-seal operation is generally preferred.

Among polymers ill-suited for high-frequency heating are olefin polymers, e.g., polymers and copolymers of ethylene, propylene, styrene or other α-olefinically unsaturated hydrocarbons having 2 to 10 carbon atoms. Some of these olefin polymers may contain polar or polarizable groups, from incorporation of, e.g., acrylic or methacrylic acid or their alkyl esters as comonomers with the olefins. These groups may at high levels impart a modicum of high-frequency heatability to the polymer, but the efficacy is so slight that it is infeasible on a commercial basis. Some polymers having polar groups, e.g. chlorinated PE, ethylene/vinyl acetate copolymer, PVC, polyvinylidene chloride, and polyamide, are heatable with certain frequencies of electromagnetic radiation.

Polyethylene is particularly known in the art to be substantially unsuitable for high-frequency heating unless sensitizers are added to the polymer. This is true whether it is linear or branched, or of low, medium, or high density (see, e.g., U.S. Patent Nos. 3,336,173, 3,640,913, and 3,810,799).

The present invention provides polymers which are heatable by the action of microwave (MW) energy, a portion of the high-frequency energy range where there is a sparsity of suitable polymers.

As used herein "microwave sealability" refers to the bonding of the sealable polymer to a portion of itself or to another material using electromagnetic energy frequencies of 300 MHz-10,000 MHz. The MW range is of particular interest due to the increasing use of MW as a processing device.

## SUMMARY OF THE INVENTION

Microwave heatability (e.g., for sealing, bonding, extrusion, molding or melting) is imparted to olefin polymers by polymerizing carbon monoxide into the polymer structure in amounts of from 0.1 to 50 weight percent, thus providing novel capabilities for microwave heating of polymers which otherwise are unsuited, or ill-suited, for microwave heating operations. Novel microwave heated articles are prepared and novel microwave heating operations are provided as a result of the carbon monoxide inclusion in the polymer. Particularly terpolymers of ethylene/CO/carboxylic acids, such as acrylic acid, and salts thereof, have been found to be heatable by microwave energy, and to have better adhesion to various substrates than copolymers of ethylene/carboxylic acids and salts thereof.

The preparation of olefin polymers, copolymers, and terpolymers is well known are well known to practitioners of the relevent polymer art. For the most part, the olefin copolymers and terpolymers of interest in the present invention are prepared by the high pressure, high temperature, free-radical initiated, polymerization method such as the historically-popular ICI process or as disclosed in U.S. Patent No. 2,497,323. However, polymerization processes which employ certain coordination catalysts or metal catalysts (e.g., the Ziegler-type, Natta-type, or Phillips-type) may be used by selecting a catalyst (such as in U.S. Patent No. 3,083,184) which is not easily poisoned or deactivated by carbon monoxide or other oxygen-containing monomer and is highly reactive with many metal-carbon bonds.

Olefin polymers within the purview of this invention, which are rendered heatable by microwave radiation by incorporating carbon monoxide groups into the polymer chain, are polymers formed by polymerizing monomers having ethylenic (olefinic) unsaturation. A sole olefin or a plurality of olefins may be used along with the carbon monoxide in preparing the polymers. Preferably the olefin monomer is ethylene, sometimes including a small proportion of a $C_3$-$C_8$ aliphatic olefin for property modification. The olefin monomer can also include an unsaturated organic acid having 3 to 8 carbon atoms, such as acrylic acid, methacrylic acid, and 1-butenoic acid; alkyl esters or metal salts of these acids may also be used, such as ethyl acrylate, methyl methacrylate, 2-ethylhexyl acrylate, sodium acrylate, and potassium methacrylate.

It has been known for many years that olefins, e.g. ethylene, and carbon monoxide, can be copolymerized or terpolymerized. Also, hydrogenated CO containing olefin polymers (which contain C-OH groups along the polymer chain) are included here, such as hydrogenated ethylene/carbon monoxide copolymers prepared by the process of U.S. Patent No. 2,495,292.

The following U.S. patents are representative of the art pertaining to interpolymers of carbon monoxide

EP 0 137 332 B1

and monoolefins: 2,495,286; 2,497,323; 3,248,359; 3,780,140; and 4,143,096. The amount of CO groups in the ethylene interpolymers should be in the range of 0.1 to 50 percent by weight, preferably 1 to 40 percent by weight, most preferably 5 to 30 percent by weight.

It is also known that there are additives (sensitizers) which can be blended into a polymer, such as polyethylene to render it heatable by electromagnetic high-frequency energy, such as talc, $ZnCl_2$, carbon black, nylon, and iron oxide. Such additives, however, usually have a pronounced visual, physical, or chemical effect which, in some applications, is undesirable. Furthermore, uniform distribution of the sensitizers is essential to avoid "hot-spots" which can give irregular results and may even damage the polymer.

It is within the purview of the present invention to create microwave sensitizer groups along the polymer chain in polymers which otherwise would be ill-suited for microwave heating. Even when a polymer of the present invention is blended as a "masterbatch" with other polymer to sensitize the whole, the polymers are sufficiently compatible that little or no visual effects are encountered. Thus, clear films of olefin polymers can be prepared which are readily heat-sealed using microwave energy.

Uses for this polymer or blend technology includes packaging applications where high speed seals are required, e.g., high-frequency activated adhesive films; extrusion coatings; moldings; hot melts in uses such as aseptic packaging, retort pouches, sandwich bags; lamination of foam, fabric, or film layers; and powder moldings. Furthermore, the method of the present invention is suitable for use in RF extruders, including continuous extruders or batch extruders, used to apply wire and cable coatings.

In one aspect, this invention relates to a method of heating an olefinic polymer, characterised in that the heating is carried out using microwave energy, and in that the polymer is an olefin-containing polymer containing from 0.1 to 50 weight percent of units derived from carbon monoxide.

The invention also relates to the use of an olefinic polymer in an application in which microwave heatability is required, characterised in that the olefinic polymer is an olefin-containing polymer containing from 0.1 to 50 weight percent of units derived from carbon monoxide.

The carbon monoxide may be incorporated either by copolymerization or by blending or grafting a carbon monoxide copolymer or terpolymer into the polymer matrix. Hydrogenated forms of the above can also be used. In addition, ethylene/carbon monoxide copolymer (E/CO) and interpolymers containing CO can be used for microwave sealing applications.

We have unexpectedly found that ECO copolymers and interpolymers convert high-frequency electromagnetic radiation into heat for sealing, welding or fusing over a broad frequency range (0.1-30,000 MHz). Typically, ethylene copolymers may be heatable to some extent at low RF frequencies of 1-50 MHz (radio frequency range is typically considered to be from 1-300 MHz; microwave frequency range is 300-30,000 MHz) such as ethylene/vinyl acetate copolymer (EVA), but none have been found which efficiently heat at the higher frequencies. Other examples of polymers heatable at low frequencies, but which do not efficiently heat at the higher frequencies are polyvinyl chloride (PVC), polyvinylidene chloride, chlorinated polyethylene (CPE), and Nylon 6.

The advantages of sealing polymers with high-frequency electromagnetic waves include faster and more efficient sealing, sealing through poor heat-conductors, e.g., paper or cardboard exteriors, stronger seals or bonds, improved economics based on efficient use of energy input, the ability to seal, bond, or laminate larger surface areas, sealing of thicker or more complex film laminates and specific sealing.

The general heating rate for the interaction of an electromagnetic wave can be used to determine sealing rates utilizing the following equation:

$$G = 13.3 \times 10^{-14} fF^2(E'\tan \delta) \qquad (1)$$

where G is the heating rate in cal/cm³•sec, f is the frequency in Hz of the electromagnetic wave, $F^2$ is the field strength or power in volts/cm, E' is the dielectric constant of the polymer and $\tan \delta$ is the dielectric loss tangent (measure of the heating property of the material when exposed to HF electromagnetic waves). Thus, in general (since $\tan \delta$ varies with frequency) the higher the frequency the higher the heating rate or the faster the sealing ability of the material. The carbon monoxide (CO) containing interpolymers can be sealed or heated over a broad frequency range which allows one to have the option of using microwave frequencies for optimum speed in heating or sealing. This feature (heating or sealing over such a broad frequency) appears to be unique to these interpolymers or copolymers containing CO.

There are also advantages of CO copolymers or interpolymers over other polymers (e.g., PVC, $PVCl_2$, CPE, EVA), that are sealable using radio frequency sealing methods which include, for example:

1. E/CO is like conventional low density polyethylenes in physical properties and film appearance, i.e., higher melting point, low film blockage, easy processability, can be used for film, extrusion coating and

4

molding resin. Furthermore, the need for plasticizers is obviated.

2. CO can be copolymerized with ethylene and vinyl acetate to produce a CO-modified EVA polymer to render it more sealable and broadens the sealing frequency range. CO can also be copolymerized into an EAA or EMAA polymer allowing an EAA-like or EMAA-like terpolymer to be RF and microwave sealable (EAA and EMAA are not RF or microwave sealable). This includes the metal salts or "ionomer-type" embodiments of these polymers.

3. CO containing copolymers or interpolymers have higher dielectric constants than EVA copolymers, allowing higher field strengths to be used without the fear of arcing.

We have also found that certain terpolymers of ethylene/carbon monoxide/carboxylic acid are suitable for use as films or as other materials and have the beneficial property of being microwave heatable.

The carboxylic acid moiety of the terpolymer may be any of the unsaturated carboxylic acids which are polymerizable through the double-bond, such as acrylic acid, methacrylic acid, crotonic acid, and 1-butenoic acid, especially acrylic acid or methacrylic acid, most especially acrylic acid, including salts of these acids, such as metal salts, especially Na or K salts, commonly known as "ionomer" salts. The preparation of these E/CO/acid terpolymers may be done in the same manner as the E/acid copolymers as disclosed in U.S. 3,520,861 and U.S. 4,351,931. These patents disclose the use of a high pressure stirred autoclave reactor, using a free-radical initiator, to prepare uniform, random ethylene/carboxylic acid copolymers. Whereas these terpolymers can also be made by grafting techniques, by block polymerization techniques, in batch reactors, or in long tube reactors, it is preferred that stirred autoclave reactors be used whereby substantially uniform, random terpolymers are made.

Even though E/AA copolymers are generally regarded as having good adhesive properties with many substrates, as compared to polyethylene, there are some substrates where improved adhesion is desirable. Notable among these substrates where improved adhesion is desirable, are polyamides (e.g. nylons), polyolefins (e.g. LDPE, HDPE, LLDPE, PP, OPP, polyisoprene), fluoropolymers (e.g. PTFE), polyethylene terephthalate (PET), metals (e.g. steel and aluminum foil), some paper-type products (e.g. glassine and kraft paper), cured epoxy resins, ethylene/vinyl alcohol copolymers, cured novolac resins, polyurethanes, polycarbonates, chloropolymers (e.g. polychloroprene, PVC, polyvinylidene), and inorganic substrates (e.g. glass and porcelain).

Conversely, whereas E/CO copolymers exhibit a modicum of heat-activated or heat-induced adhesive properties to some substrates, it has been determined that the present E/CO/acid terpolymers exhibit greater adhesiveness in such instances, especially to such substrates as SARAN polymer and polycarbonate (where ECO has some adhesiveness) and to ethylene/vinyl alcohol copolymers, nylon, and aluminum (where E/CO exhibits little or no adhesiveness).

The adhesive properties of these E/CO/acid terpolymers may be utilized by any convenient method, such as by hot-melt application, by post-heating of the adhesive in-situ on the substrate, by application of the adhesive in a carrier, such as in a solvent or as a dispersion in an aqueous carrier or in a non-solvent. The adhesive may be used in joining substrates of similar or dissimilar materials.

These E/CO/acid terpolymers are quite similar in optics and physical properties to EAA copolymers made by the same process. Insofar as the use of these adhesive terpolymers are concerned, the ranges of the comonomer ingredients are as follows:

| Weight % of Terpolymer | | | |
| --- | --- | --- | --- |
| Monomer | Operable | Preferred | Most Preferred |
| Ethylene | 20-98 | 40-98 | 60-96 |
| Carbon Monoxide | 1-40 | 1-30 | 2-20 |
| Carboxylic Acid | 1-40 | 1-30 | 2-20 |

The melt index (M.I.), also called melt flow rate, as measured in accordance with ASTM D-1238, is preferably in the range of 0.5 to 2500, most preferably in the range of 1 to 60, even more preferably in the range of 1 to 20.

These E/CO/acid terpolymers are thermoplastic and can be thermoformed into films, sheets, tubes, or other articles. Powders of these terpolymers can be compression molded into sintered forms or the powders can be applied to the surface of a substrate where it can be heat-plastified to provide an adhesive layer or coating on the substrate or between two substrates. A film, strip, or sheet of these terpolymers can be placed between two substrates and heat-plastified to serve as an adhesive or laminate layer to hold the substrates together.

The following examples illustrate certain embodiments of the E/CO/acid terpolymers, compared with other polymers, but the invention is not limited to the specific embodiments shown.

EXAMPLE 1

The following Table I shows the time required to melt a polymer in a microwave oven (Sears Micro-classic microwave oven) at maximum power (brought 275 ml of water to boil in 2.48 minutes).

6

TABLE I

| Resin* | MI*** | Melt Time (sec)** |
|---|---|---|
| E/CO | | |
| 10% CO | 1 | 37 |
| 10% CO | 10 | 35 |
| 5% AA; 10% CO | 10 | 75 |
| 5% AA; 10% CO | 3.5 | 85 |
| 5% AA; 5% CO | 3 | 90 |
| 1% CO | 1 | 90 |
| EVA (14% VA) | wax | >10 min |
| EAA (12% AA) | wax | >10 min |
| Oxidized (PE) | wax | >10 min |
| E/vinyl alcohol | − − | 42 |
| EVA/CO (20% CO) | − − | 25 |
| EVA | | |
| 28% VA | 3.5 | >10 min |
| 18% VA | 3.0 | >10 min |
| EAA | | |
| 20% AA | 300 | >10 min |
| 30% AA | 1250 | >10 min |
| HDPE (0.965 dens.) | 0.8 | >10 min |
| LDPE (0.918 dens.) | 6 | >10 min |
| LLDPE (0.918 dens.) | 6 | >10 min |
| Nylon®-6 resin (dried) | − − | >10 min |
| Saran® B-200 polymer | − − | >10 min |
| Chlorinated PE | − − | >10 min |

  * Samples were 5.0 cm 2" discs of 1.52 mm thickness, positioned on a non-RF sensitive polycarbonate sheet.

  ** If no melting was evident in 10 minutes, the test was stopped and reported as >10 min.

  *** MI is melt index in accordance with ASTM D-1238.

  ® Registered tradenames

As can be seen from Table I, only ethylene interpolymers containing carbon monoxide melted in the microwave oven (2450 MHz).

Within the purview of the present invention, useful articles are prepared which utilize the microwave heatability and sealability of the above described CO containing olefin polymers. Layers or plies of these polymers are used as a means for sealing or bonding materials which are not, themselves, efficiently suitable for sealing or bonding. Thus multiple articles sealable by microwave electromagnetic radiation can be prepared from layers of paper, cloth, fabric, metal, ceramic, glass, wood, resin and other polymers alternating with layers of the MW sealable E/CO polymer. For example, a ring of the MW sealable E/CO polymer can be applied inside a container lid and then the lid tightly sealed to the container by exposure to a microwave radiation source.

Various substrates, including particles, films, sheets, blocks, rods, and spheres can be coated, at least in the area desired to be bonded, with these polymers and then sealed or bonded together using high-frequency electromagnetic radiation in the microwave range. Alternately, these polymers, in the form of powders or particles, may be extruded into useful shapes, or as coatings onto other materials (e.g. wire and cable coatings), using microwave radiation as the heating means.

Example 2

The examples in Table II are produced by compression molding at pressures and temperatures conducive to heat fusion. The resin samples to be tested for adhesion are first compression molded into 0.51 mm plaques and then laminated to the substrate (a film or plaque) to test for adhesion to the substrate. The adhesive of ethylene/carbon monoxide/acrylic acid terpolymers E/CO/AA, is shown in comparision to low density polyethylene, (LDPE); ethylene/acrylic acid copolymer (E/AA); ethylene/vinylacetate copolymer, (E/VA); ethylene/carbon monoxide copolymer, (E/CO); and ethylene/ carbon monoxide/vinyl acetate terpolymer, (E/CO/VA). The good adhesiveness obtainable with E/CO/AA terpolymers to the various substrates is evident, especially with nylon (a polyamide) and with polycarbonate which generally do not form strong bonds with most heat-plastified adhesives.

EP 0 137 332 B1

## TABLE II

### COMPRESSION MOLDED ADHESION VALUES (kg/cm)

| ADHESIVE | PERCENT COMONOMER WITH ETHYLENE | | | |
|---|---|---|---|---|
| | AA | CO | VA | MI |
| LDPE | - | - | - | - |
| E/AA Copolymer | 6.2 | - | - | 3.02 |
| E/AA Copolymer | 9.8 | - | - | 9.6 |
| E/AA Copolymer | 9.0 | - | - | 3.6 |
| E/VA Copolymer | - | - | 28.5 | 5.8 |
| E/VA Copolymer | - | - | 6.5 | 1.11 |
| E/CO/AA Terpolymer | 5.0 | 5.0 | - | 56.1 |
| E/CO/AA Terpolymer | 5.0 | 10.0 | - | 4.3 |
| E/CO/AA Terpolymer | 5.0 | 10.0 | - | 18.7 |
| E/CO Copolymer | 0 | 10.0 | - | 7 |
| E/CO Copolymer | 0 | 10.0 | - | 8.2 |
| E/CO/AA Terpolymer | 10.0 | 5.0 | - | 4.1 |
| E/CO/VA Terpolymer | - | 10.0 | 10.0 | 35.2 |

TABLE II   Continued

|  | SUBSTRATE | | | | | |
| ADHESIVE | A[1] | B[2] | Nylon[3] | Aluminum[4] | EVAL[5] | Polycarbonate[6] |
|---|---|---|---|---|---|---|
| LDPE | 0.002 | 0.002 | 0.002 | 0.009 | 0.002 | 0.002 |
| E/AA Copolymer | 0.002 | 0.004 | 0.43 | 3.23 | 0.089 | 0.009 |
| E/AA Copolymer | 0.002 | 0.002 | 0.68 | 5.22 | 0.125 | 0.014 |
| E/AA Copolymer | 0.002 | 0.002 | 0.75 | 4.90 | 0.089 | 0.014 |
| E/VA Copolymer | 1.34 | 1.13 | 0.96 | 0.38 | 0.55 | 0.014 |
| E/VA Copolymer | 0.007 | 0.020 | 1.15 | 1.59 | 1.22 | 0.009 |
| E/CO/AA Terpolymer | >1.87 | >0.43 | 0.33 | 3.22 | 0.55 | 1.34 |
| E/CO/AA Terpolymer | 2.11 | >0.34 | 1.77 | 2.86 | 1.34 | >1.86 |
| E/CO/AA Terpolymer | 1.61 | >0.75 | >4.15 | 4.02 | 1.41 | >1.86 |
| E/CO Copolymer | 1.72 | >0.43 | 0.089 | 0.07 | 0.04 | >1.39 |
| E/CO Copolymer | 1.84 | >0.73 | 0.017 | 0.14 | 0.09 | >1.47 |
| E/CO/AA Terpolymer | 1.27 | 0.27 | >4.32 | 4.45 | 1.23 | - |
| E/CO/VA Terpolymer | 1.47 | 1.09 | 1.57 | 0.35 | 0.24 | - |

> indicates cohesive failure strength of film substrate

A[1] 6-mil SARAN PVDC film 153 µm (6 mil)

A[2] 2-mil SARAN PVDC film 51 µm (2 mil)

[3] Nylon-6 film

[4] Aluminum

[5] ethylene/vinyl alcohol copolymer, molded 510 µm (20-mil) plaque

[6] 51 µm (2-mil) polycarbonate cast film

Example 3

To compare an ethylene/carbon monoxide copolymer (10% CO by weight, 18.7 M.I.) with an ethylene/carbon monoxide/acrylic acid terpolymer (10% CO and 5% AA by weight, 12.8 M.I.), a 51 µm (2-mil) thick coating of each is extrusion-coated onto various substrates and adhesion (kg/cm) is measured by the T-Peel Test of ASTM D-1876. In Table III below, Sample A is the E/CO copolymer extrusion-coated at 300° C and Sample B is the E/CO/AA terpolymer extrusion-coated at 290° C. The results illustrate the superior adhesiveness of E/CO/AA terpolymers as compared to E/CO copolymers.

TABLE III

| ADHESIVE STRENGTH (kg/cm) | | | | | | | |
|---|---|---|---|---|---|---|---|
| SAMPLE | PDVC | PET | POLYAMIDE | OPP | ALUMINUM | LDPE | LLDPE |
| A | >5* | 0.089 | 0.057 | <0.009 | 0.025 | 0.054 | 0.012 |
| B | >5* | 0.286 | 0.436 | 0.009 | 0.447 | 0.089 | 0.089 |

*Film failure, not adhesive failure. PDVC - polyvinylidene chloride; PET - polyethylene terephthalate; OPP - oriented polypropylene; LDPE - low density polyethylene; LLDPE - linear low density polyethylene.

The packaging industry utilizes a number of barrier resins, such as in Table IV below, and the E/CO/acid terpolymers are found to make good adhesives for making laminates which contain one or more barrier layers.

TABLE IV

| Oxygen Barrier Resistance | |
|---|---|
| Nominal Value | Polymer |
| 0.03-0.30 | ethylene/vinyl alcohol copolymers (EVAL) |
| 0.05-0.20 | polymers or copolymers based in vinyl chloride and/or vinylidene chloride monomers; SARAN |
| 2 | polyvinyl chloride (PVC) |
| 80 | plasticized PVC |
| 4 | polyethylene terephthalate (PET) |
| 10 | polyamide (nylon) |
| 125 | high density polyethylene (HDPE) |

Also E/CO/acid terpolymers are useful as heat-plastified adhesives between layers of similar plastics or resins, layers of dissimilar plastics or resins, and/or between layers of plastics or resins and completely different substrates, such as paper, cloth, metal, glass, vitreous material, wood, leather.

**Claims**

1. A method of heating an olefinic polymer, characterised in that the heating is carried out using microwave energy, and in that the polymer is an olefin-containing polymer containing from 0.1 to 50 weight percent of units derived from carbon monoxide.

2. A method as claimed in Claim 1, wherein the said microwave heating is carried out to heat seal the polymer.

3. The use of an olefinic polymer in an application in which microwave heatability of the polymer is required, characterised in that the olefinic polymer is an olefin-containing polymer containing from 0.1 to 50 weight percent of units derived from carbon monoxide.

4. The use of Claim 3, wherein the application is one in which microwave sealability is required.

5. The use of an olefinic polymer containing from 0.1 to 50 weight percent of units derived from carbon monoxide, in the sealing or bonding by microwave energy of a material which is not itself efficiently suitable for microwave sealing or bonding.

**6.** The method or use as claimed in any one of the preceding Claims, wherein the carbon monoxide comprises from 1 to 40 percent of the polymer weight.

**7.** The method or use of Claim 6, wherein the carbon monoxide comprises from 5 to 30 percent of the polymer weight.

**8.** The method or use of any one of the preceding Claims, wherein the olefinic polymer comprises copolymerized ethylene, carbon monoxide, and at least one other comonomer which is an olefinically unsaturated $C_3$-$C_8$ organic acid or an alkyl ester or metal salt of such an acid.

**9.** The method or use of Claim 8, wherein the olefinic polymer consists essentially of interpolymerized ethylene, acrylic or methacrylic acid, and carbon monoxide.

**10.** The method or use of Claim 9, wherein the olefinic polymer consists of 20 to 98 weight percent ethylene, 1 to 40 weight percent carbon monoxide, and 1 to 40 weight percent of at least one of acrylic acid and methacrylic acid.

**11.** The method or use of any one of the preceding Claims, wherein the said polymer is in the form of a microwave-sealable multi-ply article containing
   (a) at least one ply of the said olefinic polymer, and
   (b) at least one ply of a material which is ill-suited as a microwave sealable material.

**12.** The method or use of Claim 11, wherein the said material ill-suited to microwave sealing is polyvinyl chloride, polyvinylidene chloride, polyethylene terephthalate, polyamide, polypropylene, oriented polypropylene, ethylene/vinyl copolymer, polycarbonate, low density polyethylene, linear low density polyethylene, or aluminium.

**Revendications**

**1.** Procédé de chauffage d'un polymère oléfinique, procédé caractérisé par le fait que le chauffage s'effectue en utilisant l'énergie des micro-ondes, et par le fait que le polymère est un polymère contenant une oléfine et contenant de 0,1 à 50 pour-cent en poids de groupes dérivés du monoxyde de carbone.

**2.** Procédé comme revendiqué dans la revendication 1, dans lequel ledit chauffage par micro-ondes s'effectue pour sceller à chaud le polymère.

**3.** Emploi d'un polymère oléfinique dans une application dans laquelle l'aptitude du polymère à être chauffé par les micro-ondes est nécessaire, caractérisé par le fait que le polymère oléfinique est un polymère contenant une oléfine et contenant de 0,1 à 50 pour-cent en poids de groupes dérivés du monoxyde de carbone.

**4.** Emploi de la revendication 3 dans lequel l'application est une de celles dans laquelle est nécessaire l'aptitude à être scellé par les micro-ondes.

**5.** Emploi d'un polymère oléfinique contenant de 0,1 à 50 pour-cent en poids de groupes dérivés du monoxyde de carbone, dans le scellement ou la liaison, par l'énergie des micro-ondes, d'un matériau qui, par lui-même, n'est pas efficacement adapté au scellement ou à la liaison par les micro-ondes.

**6.** Procédé ou emploi comme revendiqué dans l'une quelconque des revendications précédentes, dans lequel le monoxyde de carbone constitue de 1 à 40% du poids du polymère.

**7.** Procédé ou emploi de la revendication 6, dans lequel le monoxyde de carbone constitue de 5 à 30% du poids du polymère.

**8.** Procédé ou utilisation de l'une quelconque des revendications précédentes, dans lequel le polymère oléfinique comporte de l'éthylène copolymérisé, du monoxyde de carbone, et au moins un autre comonomère qui est un acide organique en $c_3$-$c_8$ insaturé à liaison oléfinique ou un alcoylester ou un

12

sel d'un métal d'un tel acide.

**9.** Procédé ou emploi de la revendication 8 dans lequel le polymère oléfinique est essentiellement constitué d'éthylène interpolymérisé, d'acide acrylique ou méthacrylique et de monoxyde de carbone.

**10.** Procédé ou emploi de la revendication 9, dans lequel le polymère oléfinique est constitué de 20 à 98 pour-cent en poids d'éthylène, de 1 à 40 pour-cent en poids de monoxyde de carbone, et de 1 à 40 pour-cent en poids d'au moins l'un des deux, de l'acide acrylique et de l'acide méthacrylique.

**11.** Procédé ou emploi de l'une quelconque des revendications précédentes, dans lequel ledit polymère se présente sous la forme d'un article multicouches pouvant être scellé par les micro-ondes et contenant:
(a) au moins une couche dudit polymère oléfinique, et
(b) au moins une couche d'un matériau qui joue mal le rôle de matériau pouvant être scellé par les micro-ondes.

**12.** Procédé ou emploi de la revendication 11, dans lequel ledit matériau qui joue mal le rôle de matériau pouvant être scellé par les micro-ondes est le chlorure de polyvinyle, le chlorure de polyvinylidène, le téréphthalate de polyéthylène, un polyamide, le polypropylène, le polypropylène orienté, un copolymère éthylène/vinyle, un polycarbonate, le polyéthylène basse densité, le polyéthylène linéaire basse densité, ou l'aluminium.

**Patentansprüche**

**1.** Verfahren zum Erwärmen eines olefinischen Polymers,
**dadurch gekennzeichnet**,
daß zum Erwärmen Mikrowellenenergie verwendet wird, und dadurch, daß das Polymer ein olefinhaltiges Polymer ist, das von 0,1-50 Gew.-% von Kohlenmonoxid abgeleitete Einheiten enthält.

**2.** Verfahren nach Anspruch 1,
**dadurch gekennzeichnet,**
daß das Erwärmen mittels Mikrowellen ausgeführt wird, um das Polymer heiß zu siegeln.

**3.** Verwendung eines olefinischen Polymers bei einer Anwendung, bei der Erwärmbarkeit des Polymeren durch Mikrowellen erforderlich ist,
**dadurch gekennzeichnet,**
daß das olefinische Polymer ein olefinhaltiges Polymer ist, das von 0,1-50 Gew.-% von Kohlenmonoxid abgeleitete Einheiten enthält.

**4.** Verwendung nach Anspruch 3,
**dadurch gekennzeichnet,**
daß sie eine Verwendung ist, die Mikrowellensiegelbarkeit erfordert.

**5.** Verwendung eines olefinischen Polymers, das von 0,1-50 Gew.-% von Kohlenmonoxid abgeleitete Einheiten enthält, zum Versiegeln oder Verbinden eines Materials durch Mikrowellenenergie, das selbst nicht zum Versiegeln oder Verbinden durch Mikrowellen geeignet ist.

**6.** Verfahren oder Verwendung nach jedem der vorstehenden Ansprüche,
**dadurch gekennzeichnet,**
daß das Kohlenmonoxid 1-40 % des Polymergewichtes ausmacht.

**7.** Verfahren oder Verwendung nach Anspruch 6,
**dadurch gekennzeichnet,**
daß das Kohlenmonoxid 5-30 % des Polymergewichtes ausmacht.

**8.** Verfahren oder Verwendung nach jedem der vorstehenden Anspüche,
**dadurch gekennzeichnet,**
daß das olefinishe Polymer mit Ethylen copolymerisiert enthält Kohlenmonoxid und mindestens ein anderes Comonomer, das eine olefinisch ungesättigte organische Säure mit 3-8 Kohlenstoffatomen oder ein Alkylester oder Metallsalz einer solchen Säure ist.

9. Verfahren oder Verwendung nach Anspruch 8,
**dadurch gekennzeichnet,**
daß das olefinische Polymer im wesentlich aus mischpolymerisiertem Ethylen, Acrylsäure oder Methacrylsäure und Kohlenmonoxid besteht.

10. Verfahren oder Verwendung nach Anspruch 9,
**dadurch gekennzeichnet,**
daß das olefinische Polymer aus 20-98 Gew.-% Ethylen, 1-40 Gew.-% Kohlenmonoxid und 1-40 Gew.-% mindestens einem von Acrylsäure und Methacrylsäure besteht.

11. Verfahren oder Verwendung nach jedem der vorstehenden Ansprüche,
**dadurch gekennzeichnet,**
daß das Polymer in Form eines durch mikrowellensiegelbaren, mehrschichtigen Gegenstandes vorliegt, enthaltend
    (a) mindestens eine Schicht des olefinischen Polymeren und
    (b) mindestens eine Schicht eines Materials, das schlecht als durch Mikrowellen siegelbares Material verwendbar ist.

12. Verfahren oder Verwendung nach Anspruch 11,
**dadurch gekennzeichnet,**
daß das schlecht durch Mikrowellen siegelbare Material Polyvinylchlorid, Polyvinylidenchlorid, Polyethylenterephthalat, Polyamid, Polypropylen, orientiertes Polypropylen, Ethylen/Vinylcopolymer, Polycarbonat, Polyethylen niederer Dichte, lineares Polyethylen niederer Dichte oder Aluminium ist.